# EUROPEAN PATENT APPLICATION

(11) **EP 2 664 486 A1**
(43) Date of publication of application: **20.11.2013**
(21) Application number: 12733963.8
(22) Date of filing: 11.01.2012
(51) Int. Cl.: B60L 15/20, B60K 6/26, B60K 6/36, B60K 6/40, B60K 6/44, B60K 6/52, B60L 11/14, B60W 10/08, B60W 20/00, F16H 1/32, H02K 7/116, H02P 5/747

(54) **MOTOR DRIVE FORCE TRANSMISSION DEVICE**

(30) Priority: 11.01.2011 JP 2011003349; 17.02.2011 JP 2011032206; 30.03.2011 JP 2011073852; 24.11.2011 JP 2011256577; 21.12.2011 JP 2011280033
(71) Applicant: JTEKT Corporation, Osaka-shi, Osaka 542-8502 (JP)
(72) Inventor: KOBAYASHI, Tsune, Osaka-shi Osaka 542-8502 (JP); ONOZAKI, Tohru, Osaka-shi Osaka 428-502 (JP); TAGAMI, Masaharu, Osaka-shi Osaka 542-8502 (JP); YAMAMORI, Motoyasu, Osaka-shi Osaka 542-8502 (JP); TAKUNO, Hiroshi, Osaka-shi Osaka 542-8502 (JP); SUZUKI, Kunihiko, Osaka-shi Osaka 542-8502 (JP); TAKAI, Tomoyoshi, Osaka-shi Osaka 542-8502 (JP); NOMURA, Keita, Osaka-shi Osaka 542-8502 (JP)
(74) Representative: TBK
(86) International application number: PCT/JP2012/050383
(87) International publication number: WO 2012/096308

(57) **Abstract**

[Problem] To provide a motor drive force transmission device capable of inhibiting and continuously using the excessive heat of an electric motor generated from continuously operating same over a long period of time. [Solution] A motor drive force transmission device (1) is provided with: a deceleration transmission mechanism (2) for transmitting the motor drive force to a rear differential (107) ; a first electric motor (3) coupled to the rear differential (107) via the deceleration transmission mechanism (2) and for generating a first motor drive force (a); a second electric motor (4) connected to the first electric motor (3) and the deceleration transmission mechanism (2) and for generating a second motor drive force (b) ; and an ECU (5) for outputting a control signal for driving the first electric motor (3) and the second electric motor (4) when a torque equal to or greater than a predetermined torque is required as the drive torque for the rear differential (107), and a control signal for alternately driving the first electric motor (3) and the second electric motor (4) when a torque less than the predetermined torque is required as the drive torque.

## Description

### Technical Field

The present invention relates to a motor driving force transmission device which is preferably used in an electric vehicle having, for example, an electric motor as a drive source.

### Background Art

In conventional motor driving force transmission devices, there are driving force transmission devices that include an electric motor which produces a motor driving force and a speed reduction and transmission mechanism for transmitting the motor driving force of the electric motor to a differential mechanism, which are installed in a motor vehicle (refer to Patent Literature 1, for example).

The electric motor has an output shaft that rotates based on electric power of an onboard battery and which is disposed on one side of the differential mechanism.

The speed reduction and transmission mechanism includes two speed reducing gear sets and is connected to the electric motor and the differential mechanism. The first speed reducing gear set is connected to the output shaft of the electric motor, and the second speed reducing gear set is connected to a differential case of the differential mechanism.

In this configuration, the output shaft of the electric motor rotates based on the electric power of the onboard battery, and in association with the rotation of the electric motor, the motor driving force is transmitted from the electric motor to the differential mechanism via the speed reduction and transmission mechanism. Then, the motor driving force transmitted to the differential mechanism is delivered to left and right wheels from the differential mechanism.

### Prior Art Literature

### Patent Literature

Patent Literature 1: JP-A-2004-17807

### Summary of the Invention

### Problem that is to be solved by the Invention

According to the motor driving force transmission device described in Patent Literature 1, however, the electric motor is heated excessively as a result of being operated continuously over a long period of time, resulting in a situation in which the motor driving force transmission device cannot be used continuously.

Consequently, an object of the invention is to provide a motor driving force transmission device which can restrain an electric motor from being heated excessively as a result of a long-time continuous operation thereof, thereby enabling the device to be used continuously.

### Means for Solving the Problem

With a view to attaining the object, the invention provides a motor driving force transmission device which will be described under (1) to (3).

(1) A motor driving force transmission device comprising a speed reduction and transmission mechanism which is configured to transmit at least one of a first motor driving force and a second motor driving force to a differential mechanism, a first electric motor which is connected to the differential mechanism via the speed reduction and transmission mechanism and which is configured to produce the first motor driving force, a second electric motor which is connected to the first electric motor and the speed reduction and transmission mechanism and which is configured to produce the second motor driving force, and a control unit which is configured to output control signals to control the second electric motor and the first electric motor, wherein the control unit outputs a control signal to drive both the first electric motor and the second electric motor when a driving torque for the differential mechanism is equal to or larger than a predetermined torque and outputs a control signal to drive alternately the first electric motor and the second electric motor when the driving torque for the differential mechanism is smaller than the predetermined torque.

(2) In the motor driving force transmission device according to (1) above, the speed reduction and transmission mechanism includes: a pair of eccentric cams which are configured to rotate as at least one of the first electric motor and the second electric motor is driven; and a pair of transmission members which are configured to rotate as the pair of eccentric cams rotate, the pair of transmission members being connected to the differential mechanism at portions which are spaced apart from each other at equal intervals around a rotational axis of the differential mechanism.

(3) In the motor driving force transmission device according to (2) above, the first electric motor and the second electric motor each include a stator and a rotor, and the stators are connected to each other by a first connecting member through which the pair of transmission members are inserted and the rotors are connected to each other on an outer circumference of the stators by a second connecting member. Advantage of the Invention

According to the invention, it is possible to restrain the electric motor from being heated excessively as a result of a long-time continuous operation, thereby enabling the device to be used continuously.

### Brief Description of the Drawings

Fig. 1 is a plan view shown to schematically illustrate a vehicle in which a motor driving force transmission device according to a first embodiment of the invention is installed.
Fig. 2 is a sectional view shown to illustrate the motor driving force transmission device according to the first embodiment of the invention.
Fig. 3 is a sectional view (a sectional view taken along the line A-A in Fig. 2) showing a speed reduction and transmission mechanism of the motor driving force transmission device according to the first embodiment of the invention.
Fig. 4 is a sectional view showing an operating state of the speed reduction and transmission mechanism of the motor driving force transmission device according to the first embodiment of the invention.
Fig. 5 is a block diagram shown to illustrate the motor driving force transmission device according to the first embodiment of the invention.
Fig. 6 is a graph shown to illustrate an advantage of a countermeasure against heat taken in the motor driving force transmission device according to the first embodiment of the invention.
Fig. 7 is a sectional view showing a motor driving force transmission device according to a second embodiment of the invention.
Fig. 8 is a sectional view showing an operating state of a speed reduction and transmission mechanism of the motor driving force transmission device according to the second embodiment of the invention.

### Mode for Carrying out the Invention

### [First Embodiment]

Hereinafter, a motor driving force transmission device according to a first embodiment of the invention will be described in detail by reference to the drawings.

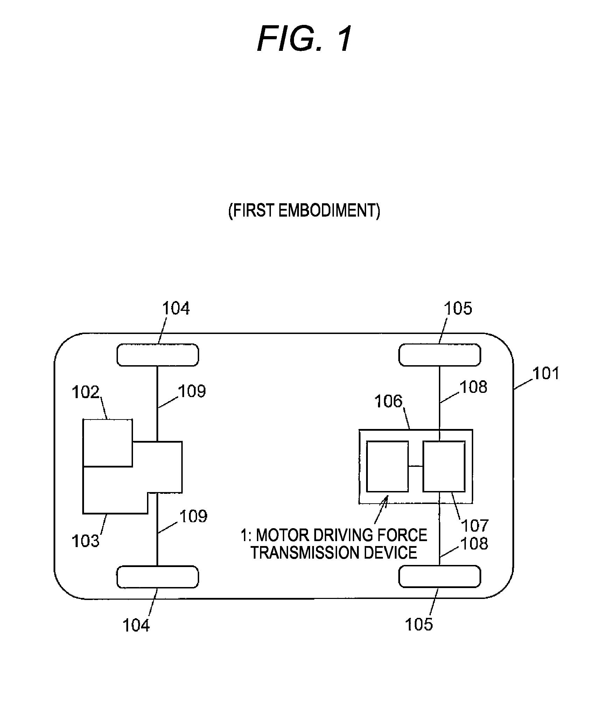

Fig. 1 shows schematically a four-wheel-drive vehicle. As shown in Fig. 1, a four-wheel-drive vehicle 101 employs a front drive line system related with front wheels which employs an engine as a drive source and a rear drive line system related with rear wheels which employs an electric motor as a drive source and includes a motor driving force transmission device 1, an engine 102, a transaxle 103, a pair of front wheels 104, and a pair of rear wheels 105.

The motor driving force transmission device 1 is disposed in the rear drive line system of the four-wheel-drive vehicle 101 and is supported together with a rear differential 107 on a vehicle body (not shown) of the four-wheel-drive vehicle 101 via a differential carrier 106.

Additionally, the motor driving force transmission device 1 is designed to transmit a motor driving force of an electric motor (which will be described later) to the pair of rear wheels 105. This configuration enables the motor driving force of the electric motor to be outputted to rear axle shafts 108 via the motor driving force transmission device 1 and the rear differential 107, whereby the pair of rear wheels 105 are driven. The motor driving force transmission device 1 will be described in detail later.

The engine 102 is disposed in the front drive line system of the four-wheel-drive vehicle 101. This configuration allows a driving force of the engine 102 to be outputted to front axle shafts 109 via the transaxle 103, whereby the pair of front wheels 104 are driven.

### (Overall Configuration of Motor Driving Force Transmission Device 1)

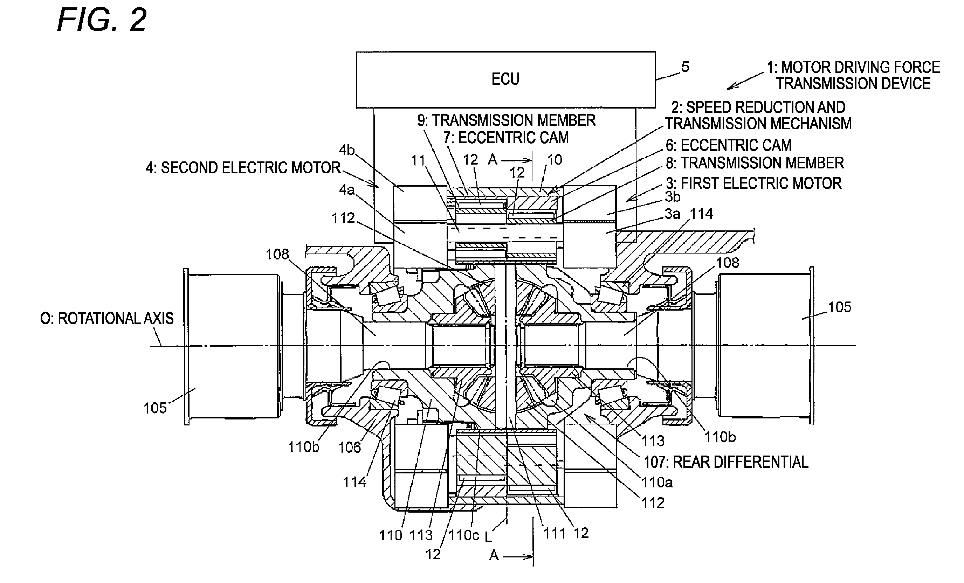

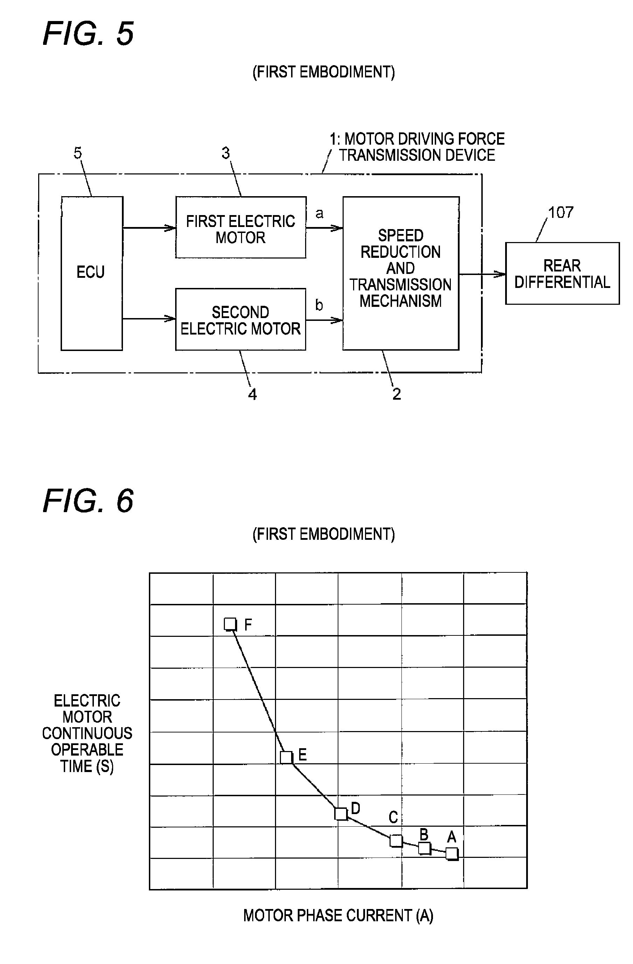

Fig. 2 shows the whole of the motor driving force transmission device. As shown in Fig. 2, the motor driving force transmission device 1 substantially includes a speed reduction and transmission mechanism 2 which transmits at least one motor driving force of a first motor driving force a and a second motor driving force b (both of which are shown in Fig. 5) to the rear differential 107, a first electric motor 3 which produces the first motor driving force a, a second electric motor 4 which produces the second motor driving force b, and a vehicle ECU (Electronic Control Unit) 5 which functions as a control unit for outputting control signals which control the first electric motor 3 and the second electric motor 4.

The rear differential 107 is made up of a differential mechanism of a bevel gear type having a differential case (an input member) 110, a pinion gear shaft 111, a pair of pinion gears 112 and a pair of side gears 113 and is accommodated within the differential carrier 106.

By adopting this configuration, a rotational force of the differential case 110 is delivered from the pinion gear shaft 111 to the side gears 113 via the pinion gears 112 and is further transmitted to the left and right rear wheels 105 from the rear axle shafts 108.

On the other hand, when a difference in driving resistance is produced between the left and right rear wheels 105, the rotational force of the differential case 110 is delivered to the left and right rear wheels 105 in a differential fashion as a result of spinning or rotating of the pinion gears 112.

The differential case 110 has an accommodating space 110a and shaft insertion holes 110b in an interior thereof and is disposed rotatably within the differential carrier 106 via tapered roller bearings 114. Additionally, the differential case 110 is designed to rotate around a rotational axis O when receiving at least one motor driving force of the first motor driving force a and the second motor driving force b. An external gear 110c which has an involute tooth profile and employs the rotational axis O as a gear axis thereof is mounted on the differential case 110.

The pinion gear shaft 111 is disposed on an axis L which intersects the rotational axis O at right angles within the accommodating space 110a in the differential case 110 and is restricted from rotating around the axis L.

The pair of pinion gears 112 are supported rotatably on the pinion gear shaft 111 and are accommodated in the accommodating space 110a in the differential case 110.

The pair of side gears 113 are accommodated within the accommodating space 110a in the differential case 110 and are connected to the rear axle shafts 108 which pass through the shaft insertion holes 110b through spline fitting. Additionally, the pair of side gears 113 are disposed so that their gear axes intersect gear axes of the pair of pinion gears 112 at right angles so as to mesh with the pair of pinion gears 112.

### (Configuration of Speed Reduction and Transmission Mechanism 2)

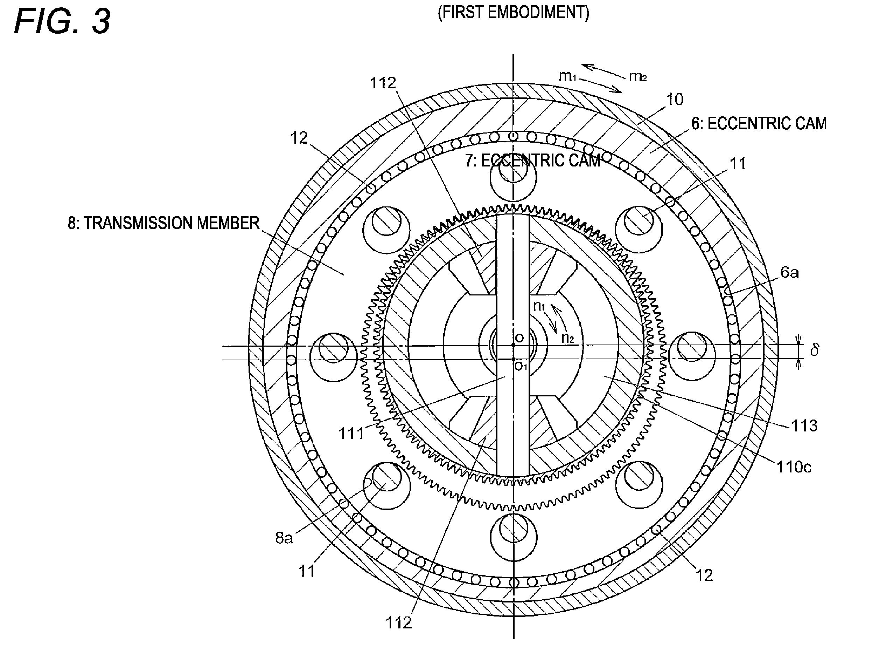

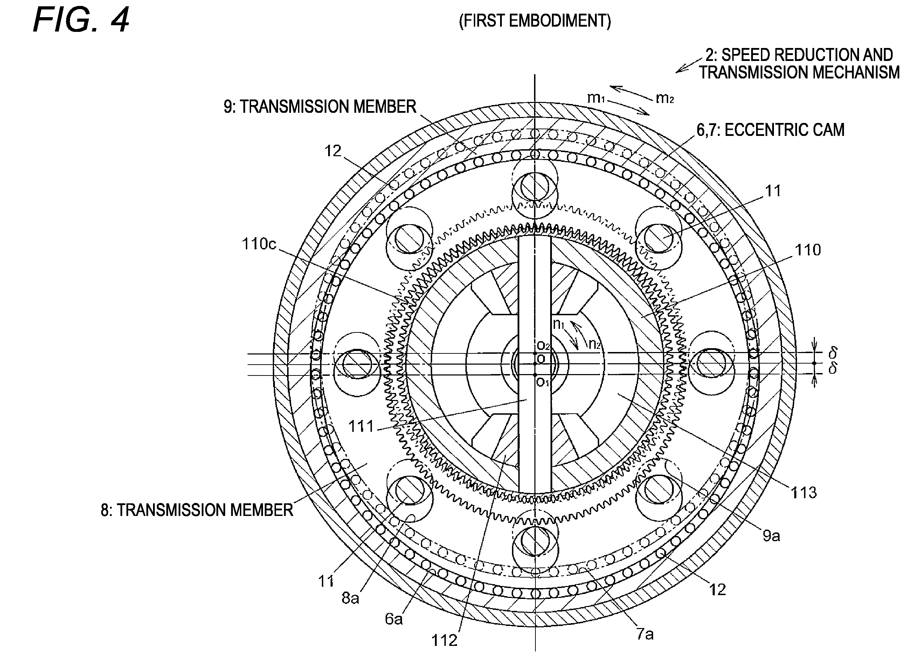

Figs. 3 and 4 show the speed reduction and transmission mechanism. As shown in Figs. 3 and 4, the speed reduction and transmission mechanism 2 has a pair of eccentric cams 6, 7 which rotate as the first electric motor 3 and the second electric motor 4 (both of which are shown in Fig. 2) are driven and a pair of transmission members 8, 9 which oscillate as the pair of eccentric cams 6, 7 rotate and is disposed on an outer circumference of the rear differential 107 while being interposed between the first electric motor 3 and the second electric motor 4 on the rotational axis O (shown in Fig. 2).

The pair of eccentric cams 6, 7 are disposed in line on the rotational axis O and are formed integrally on an inner circumferential surface of a second connecting member (a connecting cylinder) 10.

The eccentric cam 6, which is one of the pair of eccentric cams, has a through hole 6a which is centered at a point (an axis) 01 which deviates a deviation amount δ1 (δ1=δ) from a center (a point on the rotational axis O) thereof, and is disposed to face the first electric motor 3. The eccentric cam 6 is designed to cause the transmission member 8 to perform a circular motion which deviates a deviation amount δ from the rotational center O when receiving at least one motor driving force of the first motor driving force a and the second motor driving force b. When the eccentric cam 6 rotates in one circumferential direction (a direction indicated by an arrow m1), the transmission member 8 oscillates so that the axis 01 thereof moves in a direction indicated by an arrow n1 about the rotational axis O. When the eccentric cam 6 rotates in the other circumferential direction (a direction indicated by an arrow m2), the transmission member 8 oscillates so that the axis 01 thereof moves in a direction indicated by an arrow n2 (an opposite direction to the direction indicated by the arrow n1) about the rotational axis O. The transmission member 8 moves the axis 01 along a circumferential direction of a circle that is centered at the rotational axis O and which has a radius equal to the deviation amount δ and revolves without rotating one full rotation relative to the differential carrier (the device main body) 106.

The other eccentric cam 7 has a through hole 7a which is centered at a point (an axis) 02 which deviates a deviation amount δ2 (δ2=δ) from a center (a point on the rotational axis O) thereof, and is disposed to face the second electric motor 4. The other eccentric cam 7 is designed to cause the transmission member 9 to perform a circular motion which deviates the deviation amount δ from the rotational center O when receiving at least one motor driving force of the first motor driving force a and the second motor driving force b. When the eccentric cam 7 rotates in the one circumferential direction (the direction indicated by the arrow m1), the transmission member 9 oscillates so that the axis 02 thereof moves in the direction indicated by the arrow n1 about the rotational axis O. When the eccentric cam 7 rotates in the other circumferential direction (the direction indicated by the arrow m2), the transmission member 9 oscillates so that the axis 02 thereof moves in the direction indicated by the arrow n2 (the opposite direction to the direction indicated by the arrow n1) about the rotational axis O. The transmission member 9 moves the axis 02 along a circumferential direction of a circle that is centered at the rotational axis O and which has a radius equal to the deviation amount δ and revolves without rotating one full rotation relative to the differential carrier (the device main body) 106.

The pair of transmission members 8, 9 are made up of internal gears which mesh with the external gear 110c of the differential case 110, are disposed in line on the rotational axis O and are connected to the external gear 110c at portions which are spaced apart from each other at equal intervals (180°) around the rotational axis (the rotational axis O) of the external gear 110c. By adopting this configuration, the speed reduction and transmission mechanism 2 is connected to the differential 107 in a well-balanced fashion. Internal gears having an involute tooth profile are employed for the pair of transmission members 8, 9 which have a larger number of teeth than the number of teeth of the external gear 110c and which are in mesh with the external gars 110c having the involute tooth profile at all times.

The transmission member 8, which is one of the pair of transmission members, is disposed rotatably on an inner surface of the eccentric cam 6, which is one of the pair of eccentric cams, via a needle roller bearing 12. A plurality of pin insertion holes 8a are disposed in the transmission member 8 at equal intervals in a circumferential direction thereof so that a plurality of first connecting members (connecting pins) 11 are inserted therethrough, each pin insertion hole 8a having a bore diameter which is larger than a dimension resulting from adding the deviation amount δ to a pin diameter of each connecting pin 11.

The transmission member 9, which is the other of the pair of transmission members, is disposed rotatably on an inner surface of the eccentric cam 7, which is the other of the pair of eccentric cams, via a needle roller bearing 12. Similarly to the transmission member 8, a plurality of pin insertion holes 9a are disposed in the other transmission member 9 at equal intervals in a circumferential direction thereof so that the plurality of connecting pins 11 are inserted therethrough, each pin insertion hole 9a having a bore diameter which is larger than the dimension resulting from adding the deviation amount δ to the pin diameter of each connecting pin 11.

### (Configuration of First Electric Motor 3)

Fig. 5 shows a control system of the speed reduction and transmission mechanism. As shown in Fig. 5, the first electric motor 3 has a stator 3a and a rotor 3b (both of which are shown in Fig. 2) and is connected to the differential 107 via the speed reduction and transmission mechanism 2 on the rotational axis O (shown in Fig. 2), and the stator 3a is connected to the ECU 5. Additionally, the first electric motor 3 is configured so that when a control signal is inputted thereinto from the ECU 5, the stator 3a produces the first motor driving force a for operating the differential 107 between the rotor 3b and itself so as to rotate the rotor 3b.

The stator 3a has coils (not shown) which receive electric power supplied from an onboard battery (not shown) and is disposed on an inner circumferential side of the first electric motor 3.

The rotor 3b includes magnets having magnetic poles in the circumferential direction and is disposed on an outer circumferential side of the first electric motor 3.

The second electric motor 4 has a stator 4a and a rotor 4b (both of which are shown in Fig. 2) and is connected to the differential 107 via the speed reduction and transmission mechanism 2 on the rotational axis O (shown in Fig. 2), and the stator 4a is connected to the ECU 5. Additionally, the first electric motor 4 is configured so that when a control signal is inputted thereinto from the ECU 5, the stator 4a produces the second motor driving force b for operating the differential 107 between the rotor 4b and itself so as to rotate the rotor 4b.

The stator 4a has coils (not shown) which receive electric power supplied from the onboard battery (not shown), is disposed on an inner circumferential side of the second electric motor 4, and are connected to the stator 3a of the first electric motor 3 via the plurality of connecting pins 11.

The rotor 4b includes magnets having magnetic poles in the circumferential direction, is disposed on an outer circumferential side of the second electric motor 4, and is connected to the rotor 3b of the first electric motor 3 via the connecting cylinder 10.

### (Configuration of ECU 5)

The ECU 5 is connected to a sensor (not shown) in addition to the first electric motor 3 and the second electric motor 4. Additionally, when a detection signal is inputted thereinto which signals that a driving torque which is smaller than a predetermined torque is required for the rear differential 107, the ECU 5 outputs a control signal to drive alternately the first electric motor 3 and the second electric motor 4, while the detection signal signals that a driving torque which is equal to or larger than the predetermined torque is required for the rear differential 107, the ECU 5 outputs a control signal to drive both the first electric motor 3 and the second electric motor 4.

By adopting this configuration, the ECU 5 puts the four-wheel-drive vehicle 101 in a four-wheel-drive state based on the front drive line system and the rear drive line system by not only operating the rear drive line system by driving at least one electric motor of the first electric motor 3 and the second electric motor 4 but also driving the front wheels 104 by the engine 102.

In addition, the ECU 5 puts the four-wheel-drive vehicle 101 in a two-wheel-drive state by stopping the operation of the rear drive line system by stopping the driving of the first electric motor 3 and the second electric motor 4 during the normal running of the four wheel-drive vehicle 101 while allowing the engine 102 to drive the front wheels 104.

### (Operation of Motor Driving Force Transmission Device 1)

Next, the operation of the motor driving force transmission device illustrated in this embodiment will be described by using Figs. 1 to 4 and 6. Fig. 6 shows a relation between electric motor continuous operable time and motor phase current.

In Fig. 2, when, by supplying electric power to one electric motor of the first electric motor 3 and the second electric motor 4 (for example, the first electric motor 3) of the four-wheel-drive vehicle 101 (shown in Fig. 1), the first electric motor 3 is driven, the first motor driving force a of this first electric motor 3 is imparted to the speed reduction and transmission mechanism 2 via the connecting cylinder 10, whereby the speed reduction and transmission mechanism 2 is actuated.

Because of this, in the speed reduction and transmission mechanism 2, as shown in Figs. 3 and 4, the eccentric cams 6, 7 rotate, for example, in the direction indicated by the arrow m1, and the transmission members 8, 9 perform circular motions in the direction indicated by the arrow n1 while sliding on each other with the transmission members 8, 9 each deviating the deviation amount δ from the rotation axis O.

In conjunction with this, the first motor driving force a is transmitted from the transmission members 8, 9 to the external gear 110c of the rear differential 107 (shown in Fig. 1), whereby the external gear 110c rotates in the opposite direction (the direction indicated by the arrow m2) to the rotating direction of the eccentric cams 6, 7.

This actuates the differential 107, and the first motor driving force a is delivered to the rear axle shafts 108 to thereby be transmitted to the left and right rear wheels 105.

Here, to allow the motor driving force transmission device 1 to continue to operate when the driving torque which is smaller than the predetermined torque is required for the rear differential 107, when a predetermined period of time during which the first electric motor 3 is to be driven continuously elapses, the supply of electric power to the first electric motor 3 is stopped, and the second electric motor 4, which is the other electric motor, is driven. This is because the first electric motor 3 is heated excessively in case the supply of electric power to the first electric motor 3 still continues even after the predetermined period of time elapses. Thus, the first electric motor 3 is prevented from being heated excessively by stopping the supply of electric power to the first electric motor 3.

This can be understood from a graph shown in Fig. 6. Fig. 6 shows results A to F of an analysis of the relation between the time during which the electric motor can be operated continuously and the current supplied to the electric motor. According to the graph, it is possible to determine specific electric motor continuous operable periods of time according to magnitudes of electric currents supplied to the electric motor. In Fig. 6, an axis of ordinates represents electric motor continuous operable time, and an axis of abscissas represents electric current supplied to the electric motor.

Then, when the second electric motor 4 is driven by supplying electric power to the second electric motor 4, the second motor driving force b of the second electric motor 4 is imparted to the speed reduction and transmission mechanism 2 via the connecting cylinder 10, whereby the speed reduction and transmission mechanism 2 is actuated. Because of this, in a similar way to the way in which the first electric motor 4 is driven, the second motor driving force b is transmitted to the differential 107 via the speed reduction and transmission mechanism 2. This actuates the differential 107, and the second motor driving force b is delivered to the rear axle shafts 108 to thereby be transmitted to the left and right rear wheels 105.

Here, to allow the motor driving force transmission device 1 to continue to operate when the driving torque which is smaller than the predetermined torque is required for the rear differential 107, when a predetermined period of time during which the second electric motor 4 is to be driven continuously elapses, the supply of electric power to the second electric motor 4 is stopped, and the first electric motor 3 is driven.

In this way, the first electric motor 3 and the second electric motor 4 are driven alternately to thereby restrain the first electric motor 3 and the second electric motor 4 from being heated excessively, thereby making it possible to allow the motor driving force transmission device 1 to operate continuously.

In the embodiment, while the motor driving force transmission device 1 is described as being actuated by rotating the eccentric cams 6, 7 in the direction indicated by the arrow m1, the motor driving force transmission device 1 can also be actuated in a similar way to the way described in this embodiment even by rotating the eccentric cams 6, 7 in the direction indicated by the arrow m2. As this occurs, the external gear 110c rotates in the opposite direction (the direction indicated by the arrow m1) to the rotating direction of the eccentric cams 6, 7.

In addition, in this embodiment, while the first motor driving force a or the second motor driving force b is described as being transmitted from the speed reduction and transmission mechanism 2, 71 to the rear differential 107, the invention is not limited thereto. When the driving torque which is equal to or larger than the predetermined torque is required for the rear differential 107, it is possible to transmit a motor driving force which is larger than the first motor driving force a or the second motor driving force b from the speed reduction and transmission mechanism 2 to the rear differential 107 by driving both the first electric motor 3 and the second electric motor 4.

### [Advantage of First Embodiment]

According to the first embodiment that has been described heretofore, the following advantages can be obtained.

(1) The first electric motor 3 and the second electric motor 4 can be restrained from being heated excessively as a result of the continuous operation of the motor driving force transmission device 1 over a long period of time, whereby the motor driving force transmission device 1 can be used continuously by using the first electric motor 3 and the second electric motor 4 alternately.

(2) The speed reduction and transmission mechanism 2, the first electric motor 3 and the second electric motor 4 are disposed on the rotational axis O, whereby the radial dimension of the motor driving force transmission device 1 can be reduced, thereby making it possible to realize a reduction in size of the same device as a whole.

### [Second Embodiment]

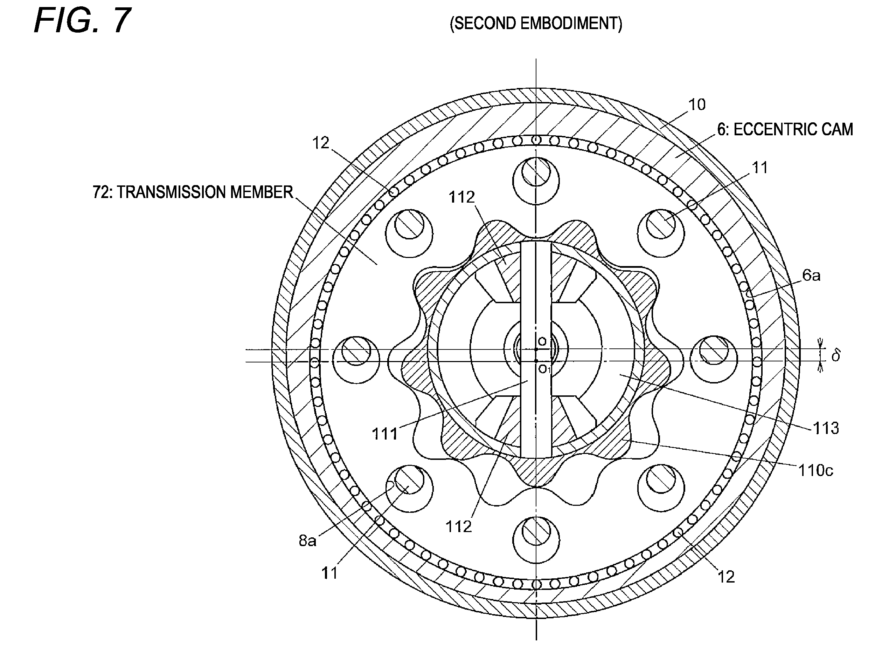

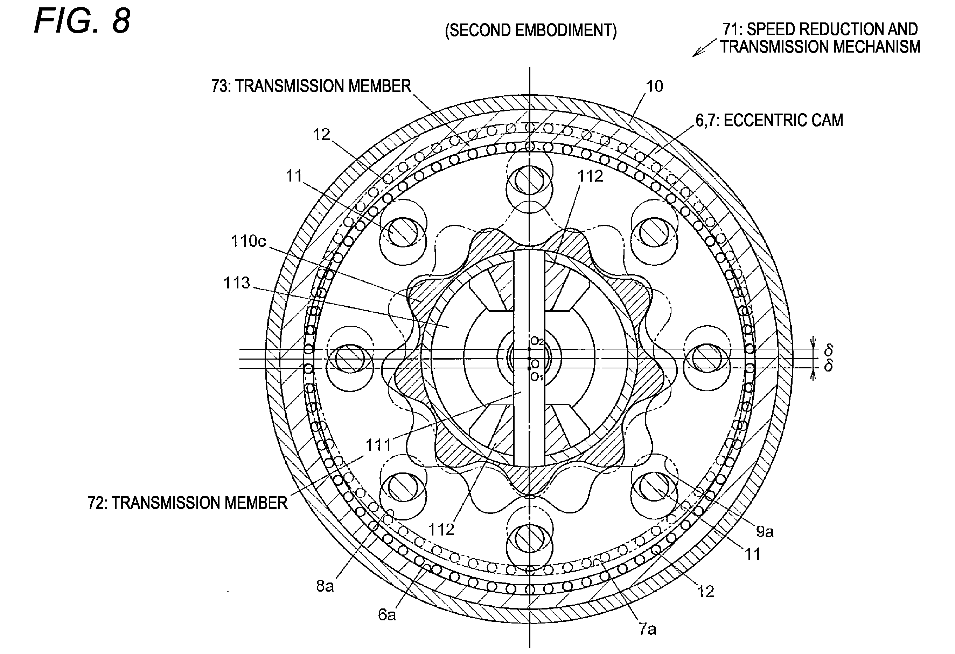

Next, a motor driving force transmission device according to a second embodiment of the invention will be described by using Figs. 7 and 8. Figs. 7 and 8 show a speed reduction and transmission mechanism. In Figs. 7 and 8, like reference numerals will be given to members which have the same or similar functions to those shown in Figs. 3 and 4, and the detailed description thereof will be omitted here.

As shown in Figs. 7 and 8, a speed reduction and transmission mechanism 71 of a motor driving force transmission device according to the second embodiment of the invention is characterized in that a pair of transmission members 72, 73 are formed of internal gears having a cycloid tooth profile.

Because of this, an external gear 110c of a differential case 110 of a differential 107 is formed of an external gear having a cycloid tooth profile that has a smaller number of teeth than those of the pair of transmission members 72, 73 and which is normally in mesh with the pair of transmission members 72, 73.

Additionally, the pair of transmission members 72, 73 are disposed in line on a rotational axis O (shown in Fig. 2) and are connected to the external gear 110c at portions which are spaced 180° apart from each other around the rotational axis (the rotational axis O) thereof.

In the motor driving force transmission device configured in the way described above, similar to the motor driving force transmission device 1 described in the first embodiment, by driving alternately a first electric motor 3 and a second electric motor 4, the first electric motor 3 and the second electric motor 4 can be restrained from being heated excessively, whereby the motor driving force transmission device 1 can be operated continuously.

### [Advantage of the Second Embodiment]

According to the second embodiment that has been described above, a similar advantage to the advantage of the first embodiment can be obtained.

Thus, while the motor driving force transmission device of the invention has been described based on the embodiments thereof, the invention is not limited to the embodiments that have been described above, and hence, the invention can be carried out in various forms without departing from the spirit and scope thereof. For example, the following modifications are possible.

(1) In the embodiments, while the first electric motor 3 and the second electric motor 4 are driven alternately every time the predetermined period of time elapses, the invention is not limited thereto. The electric motors may be switched to be driven when the integral value of the motor current of the first electric motor 3 or the second electric motor 4 reaches or exceeds a predetermined threshold. Alternatively, the electric motors may be switched to be driven when the temperature of the first electric motor 3 or the second electric motor 4 reaches or exceeds a predetermined threshold.

(2) In the embodiments, while the invention is described as being applied to the four-wheel-drive vehicle 101 in which the engine 102 and the electric motors 3, 4 are used in parallel as a drive source, the invention is not limited thereto. Hence, the invention can also be applied to an electric vehicle in which only an electric motor is used as a drive source in a similar way to the way in which the embodiment is carried out.

This patent application is based on Japanese Patent Application No. 2011-3349 filed on January 11, 2011, Japanese Patent Application No. 2011-32206 filed on February 17, 2011, Japanese Patent Application No. 2011-73852 filed on March 30, 2011, Japanese Patent Application No. 2011-256577 filed on November 24, 2011, and Japanese Patent Application No. 2011-280033 filed on December 21, 2011, the contents of which are incorporated herein by reference.

### Industrial Applicability

According to the invention, it is possible to restrain the electric motors from being heated excessively as a result of the long-time continuous operation, whereby the motor driving force transmission device can be used continuously. Description of Reference Numerals and Characters

1 motor driving force transmission device; 2 speed reduction and transmission mechanism; 3 first electric motor; 3a stator; 3b rotor; 4 second electric motor; 4a stator; 4b rotor; 5 ECU; 6, 7 eccentric cam; 8, 9 transmission member; 10 connecting cylinder; 11 connecting pin; 12 needle roller bearing; 71 speed reduction and transmission mechanism; 72, 73 transmission member; 101 four-wheel-drive vehicle; 102 engine; 103 transaxle; 104 front wheel; 105 rear wheel; 106 differential carrier; 107 rear differential; 108 rear axle shaft; 109 front axle shaft; 110 differential case; 110a accommodating space; 110b shaft insertion hole; 110c external gear; 111 pinion gear shaft; 112 pinion gear; 113 side gear; 114 tapered roller bearing; a first motor driving force, b second motor driving force; O rotational axis; L axis; δ deviation amount.

## Claims

1. A motor driving force transmission device comprising:
a speed reduction and transmission mechanism which is configured to transmit at least one of a first motor driving force and a second motor driving force to a differential mechanism;
a first electric motor which is connected to the differential mechanism via the speed reduction and transmission mechanism and which is configured to produce the first motor driving force;
a second electric motor which is connected to the first electric motor and the speed reduction and transmission mechanism and which is configured to produce the second motor driving force; and
a control unit which is configured to output control signals to control the second electric motor and the first electric motor, wherein
the control unit outputs a control signal to drive both the first electric motor and the second electric motor when a driving torque for the differential mechanism is equal to or larger than a predetermined torque and outputs a control signal to drive alternately the first electric motor and the second electric motor when the driving torque for the differential mechanism is smaller than the predetermined torque.

2. The motor driving force transmission device according to Claim 1, wherein
the speed reduction and transmission mechanism includes: a pair of eccentric cams which are configured to rotate as at least one of the first electric motor and the second electric motor is driven; and a pair of transmission members which are configured to rotate as the pair of eccentric cams rotate, the pair of transmission members being connected to the differential mechanism at portions which are spaced apart from each other at equal intervals around a rotational axis of the differential mechanism.

3. The motor driving force transmission device according to Claim 2, wherein
the first electric motor and the second electric motor each include a stator and a rotor, and the stators are connected to each other by a first connecting member through which the pair of transmission members are inserted and the rotors are connected to each other on an outer circumference of the stators by a second connecting member.

## Amended claims

### Amended claims under Art. 19.1 PCT

**1.** A motor driving force transmission device comprising:
a speed reduction and transmission mechanism which is configured to transmit at least one of a first motor driving force and a second motor driving force to a differential mechanism;
a first electric motor which is connected to the differential mechanism via the speed reduction and transmission mechanism and which is configured to produce the first motor driving force;
a second electric motor which is connected to the first electric motor and the speed reduction and transmission mechanism and which is configured to produce the second motor driving force; and
a control unit which is configured to output control signals to control the second electric motor and the first electric motor, wherein
the control unit outputs a control signal to drive both the first electric motor and the second electric motor when a driving torque for the differential mechanism is equal to or larger than a predetermined torque and outputs a control signal to drive alternately the first electric motor and the second electric motor when the driving torque for the differential mechanism is smaller than the predetermined torque, and
the speed reduction and transmission mechanism includes: a pair of eccentric cams which are configured to rotate as at least one of the first electric motor and the second electric motor is driven; and a pair of transmission members which are configured to rotate as the pair of eccentric cams rotate, the pair of transmission members being connected to the differential mechanism at portions which are spaced apart from each other at equal intervals around a rotational axis of the differential mechanism.

**2.** The motor driving force transmission device according to Claim 1, wherein
the first electric motor and the second electric motor each include a stator and a rotor, and the stators are connected to each other by a first connecting member through which the pair of transmission members are inserted and the rotors are connected to each other on an outer circumference of the stators by a second connecting member.
